# EUROPÄISCHE PATENTSCHRIFT

(11) **EP 0 332 977 B1**
(45) Veröffentlichungstag und Bekanntmachung des Hinweises auf die Patenterteilung: **08.06.1994**
(21) Anmeldenummer: 89103929.9
(22) Anmeldetag: 06.03.1989
(51) Int. Cl.: H04Q 11/04, H04M 3/56

(54) **Verfahren zum Steuern des Aufbaus von Datenübertragungsverbindungen in Telekommunikationsanlagen**
Method of establishing data transfer connexions in a telecommunication exchange
Méthode pour la réalisation des liaisons de transfert de données dans un central de télécommunication

(30) Priorität: 15.03.1988 DE 3808647
(43) Veröffentlichungstag der Anmeldung: 20.09.1989
(73) Patentinhaber: Siemens Nixdorf Informationssysteme Aktiengesellschaft, 33102 Paderborn (DE)
(72) Erfinder: Schreiber, Harald, D-4796 Salzkotten (DE)
(74) Vertreter: Fuchs, Franz-Josef, Dr.-Ing.

(56) Entgegenhaltungen:
- WO-A-85/00261
- DE-A- 3 240 999
- US-A- 3 991 280
- TECHNICAL DIGEST - WESTERN ELECTRIC. no. 70, April 1983, NEW YORK US Seiten 1-2; M.T. Ardon et al.: "Party-line service through software"

## Beschreibung

Die Erfindung betrifft ein Verfahren zum Steuern des Aufbaus von Datenübertragungsverbindungen in Telekommunikationsanlagen mit digitalen Koppelfeldern und Teilnehmer-Berechtigungskennzeichnung, bei dem die jeweilige Datenübertragungsverbindung nach Verbindungsanforderung eines Teilnehmers abhängig von einer Belegungsprüfung aufgebaut wird.

In Telekommunikationsanlagen werden Datenübertragungsverbindungen und/oder Fernsprechverbindungen über Koppelfelder als Vermittlungseinrichtungen geführt.Die Datenübertragungsverbindungen werden dabei wie normale Fernsprechverbindungen als Punkt zu Punkt-Verbindungen aufgebaut. Mehrfach-Datenübertragungsverbindungen können mit digitalen Koppelfeldern aufgebaut werden. Koppelfelder dieser Art können auch für Fernsprechverbindungen eingesetzt werden, wenn die zu übertragenden Sprachsignale vor dem Koppelfeld digitalisiert und hinter dem Koppelfeld wieder in die analoge Form umgesetzt werden. Zum Aufbau von Fernsprech- und Datenübertragungsverbindungen wird das digitale Koppelfeld also mit gleichartigen Signalen beaufschlagt. Soll eine Mehrfach-Datenübertragungsverbindung aufgebaut werden, so sind hierzu besondere schaltungstechnische Maßnahmen im Bereich des Koppelfeldes erforderlich, die etwa den sogenannten Konferenzeinschüben in der Fernsprechtechnik entsprechen. Werden unterschiedliche Arten von Verbindungen über ein Koppelfeld geführt, so können die dafür jeweils in Betracht kommenden Teilnehmer durch eine besondere Berechtigungskennzeichnung unterschieden werden, die eine Zuordnung insbesondere zu Mehrfach-Datenübertragungsverbindungen berechtigter Teilnehmer zu den dann erforderlichen besonderen Datenübertragungseinrichtungen ermöglicht.

Die Verwendung ein und desselben digitalen Koppelfeldes zum Aufbau von Fernsprechverbindungen und von Datenübertragungsverbindungen ist dann sinnvoll, wenn beide Arten der Signalübertragung mit ein und demselben schaltungstechnischen Aufwand verbunden sind. Nun ist aber bisher der Aufbau einer Mehrfach-Datenübertragungsverbindung mit besonderem, zusätzlichem Aufwand verbunden, der um so höher ist, je höher die Zahl erforderlicher Mehrfach-Datenübertragungsverbindungen ist. Dies kann bei Einsatz eines digitalen Koppelfeldes für beide Verbindungsarten schließlich zu derart umfangreichen Vermittlungseinrichtungen führen, daß deren Wirtschaftlichkeit in Frage gestellt wird.

Es ist Aufgabe der Erfindung, ein Verfahren zum Steuern des Aufbaus von Datenübertragungsverbindungen anzugeben, das die Verwendung eines digitalen Koppelfeldes für Fernsprechverbindungen und Datenübertragungsverbindungen ermöglicht, jedoch keinen zusätzlichen schaltungstechnischen Aufwand für den Aufbau von Mehrfach-Datenübertragungsverbindungen erfordert.

Für ein Verfahren der eingangs genannten Art löst die Erfindung diese Aufgabe dadurch, daß bei Koppelfeldern, in denen mindestens einer der von einem Teilnehmer hervorgerufenen Signalzustände einer Koppelleitung von einem anderen Teilnehmer her veränderbar ist, ein bei der Belegungsprüfung erkannter Belegt-Zustand die Prüfung der Berechtigungskennzeichnung des angeforderten Teilnehmers daraufhin veranlaßt, ob dieser mehrfachverbindungsfähig ist, und daß bei positivem Prüfergebnis die angeforderte Datenübertragungsverbindung aufgebaut wird.

Die Erfindung beruht auf der Erkenntnis, daß Koppelfelder der vorstehend genannten Art, die auch als Open Collector-Koppelfelder oder Tristate-Koppelfelder bezeichnet werden, besonders zum Aufbau von Mehrfachverbindungen geeignet sind, denn wenn ein von einem Teilnehmer hervorgerufener Signalzustand einer Koppelleitung von einem anderen Teilnehmer her verändert werden kann, so ist der Fall einer Kollision der Signale zweier sendender Teilnehmer auf ein und derselben Koppelleitung unschädlich, weil bei einem derartigen Funktionsprinzip zwei aktive Signalzustände nicht gegeneinander wirken. Beim bisherigen Einsatz von Koppelfeldern dieser Art wurde diese Möglichkeit der Mehrfach-Datenübertragungsverbindungen aber nicht erkannt, weil beim vorzugsweisen Einsatz für Fernsprechverbindungen das direkte Verknüpfen mehrerer sendender Teilnehmer nicht sinnvoll ist. Deshalb führte bisher das Erkennen eines Belegt-Zustandes bei der Belegungsprüfung zum sofortigen Zurückweisen eines Verbindungswunsches. Gemäß der Erfindung wird nun aber bei der Belegungsprüfung ein erkannter Belegt-Zustand dazu verwendet, eine weitere Prüfung durchzuführen, um festzustellen, ob ein angeforderter Teilnehmer mehrfachverbindungsfähig ist. Ist dies der Fall, so wird mit ihm die angeforderte Datenübertragungsverbindung aufgebaut, so daß eine Mehrfach-Datenübertragungsverbindung entsteht. Ein Verfahren nach der Erfindung ermöglicht also die Nutzung eines digitalen Koppelfeldes für Fernsprechverbindungen und für Datenübertragungsverbindungen sowie Mehrfach-Datenübertragungsverbindungen ohne zusätzlichen schaltungstechnischen Aufwand, denn die abhängig von der Belegungsprüfung durchzuführende weitere Prüfung der Berechtigungskennzeichnung kann durch einfache Abänderung für den Verbindungsaufbau ohnehin erforderlicher Verfahrensschritte unter Nutzung bereits vorhandener Steuereinrichtungen durchgeführt werden. Dabei ist es möglich, Mehrfach-Datenübertragungsverbindungen in einer Zahl aufzubauen, die lediglich durch die Kapazität des Koppelfeldes begrenzt ist, nicht aber durch zusätzliche Hilfseinrichtungen, da diese gespart werden.

Nach dem Aufbau einer Mehrfach-Datenübertragungsverbindung ist die Regelung der Kommunikation mehrerer miteinander verbundener Teilnehmer entsprechend bekannten Prinzipien durchzuführen, also z.B. nach dem bekannten CSMA/CD-Verfahren oder nach dem Master-Slave-Prinzip. Diese Organisation der Datenkommunikation ist unabhängig von Art und Aufbau der jeweils zum Einsatz gelangenden Vermittlungseinrichtung.

Um in einem System, in dem Fernsprech- und Datenübertragungsteilnehmer mit ein und demselben Koppelfeld verbindbar sind, das Aufschalten von Fernsprechteilnehmern auf Datenübertragungsverbindungen zu vermeiden, ist das Verfahren nach der Erfindung vorteilhaft derart weiter ausgebildet, daß auch eine Prüfung der Berechtigungskennzeichnung für den anfordernden Teilnehmer daraufhin erfolgt, ob dieser datenübertragungsverbindungsberechtigt ist. Dies führt dazu, daß nur Teilnehmer gleicher Art miteinander verbunden werden können denn wenn beispielsweise ein eine Verbindungsanforderung signalisierender Fernsprechteilnehmer einen in einer Mehrfach-Datenübertragungsverbindung befindlichen Teilnehmer anwählt, dann kann aus der Prüfung seiner Berechtigung zur Datenübertragungsverbindung ein Kriterium abgeleitet werden, durch das sein Verbindungswunsch zurückgewiesen wird.

Bei Datenübertragungsverbindungen sind grundsätzlich zwei unterschiedliche Übertragungsprinzipien denkbar, nämlich die Signalübertragung über ein und denselben Übertragungsweg in beiden Richtungen oder aber die Signalübertragung über zwei Übertragungswege, von denen jeder nur für eine Übertragungsrichtung vorgesehen ist. Bei Vermittlungsanlagen, die nach dem Zeitmultiplexprinzip arbeiten, kann Koppelfeldkapazität für die jeweilige Datenübertragungsverbindung gespart werden, wenn dem jeweils möglichen Übertragungsverfahren Rechnung getragen wird. Demgemäß ist eine Weiterbildung der Erfindung derart ausgebildet, daß bei nach dem Zeitmultiplexprinzip arbeitenden Vermittlungsanlagen die jeweilige Datenübertragungsverbindung abhängig von einer Teilnehmerkennzeichnungsprüfung über einen oder zwei Zeitschlitze hergestellt wird.

Die Erfindung wird im folgenden anhand der Zeichnung näher erläutert. Darin zeigen:
- Figur 1: den prinzipiellen Aufbau eines Koppelfeldes mit zentraler Steuerung und Teilnehmeranschlußleitungen für Fernsprech- und Datenübertragungsteilnehmer und
- Figure 2: das Ablaufdiagramm eines Verfahrens nach der Erfindung als Ausführungsbeispiel.

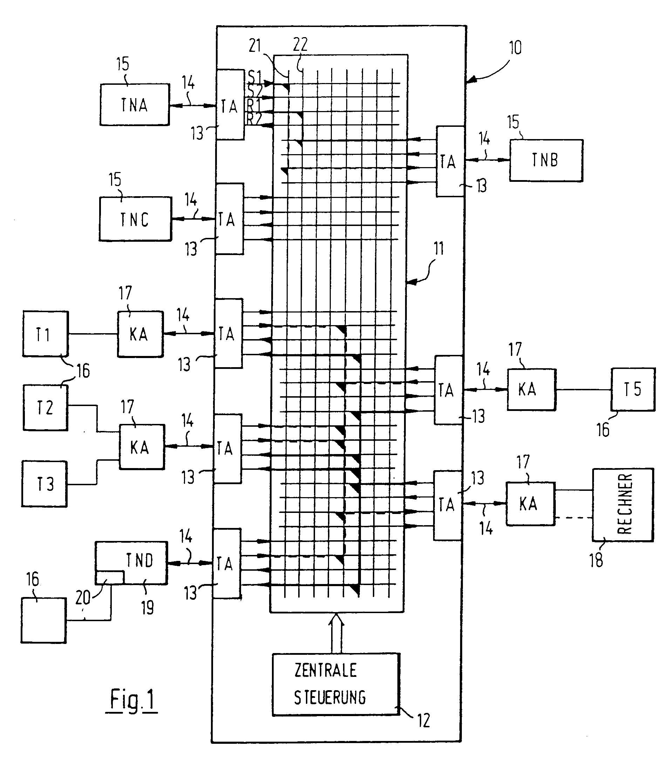

In Figur 1 ist ein Telekommunikationssystem 10 dargestellt, das als wesentliche Bestandteile ein Koppelfeld 11, eine zentrale Steuerung 12 und Teilnehmeranschlußschaltungen 13 enthält. Das Koppelfeld 11 ist als digitales Koppelfeld ausgeführt, und der Aufbau der über dieses Koppelfeld 11 verlaufenden Verbindungen wird durch die zentrale Steuerung 12 gesteuert. In dieser zentralen Steuerung 12 wird also auch das erfindungsgemäße Verfahren durchgeführt. Die Teilnehmeranschlußschaltungen 13 sind gleichartig aufgebaut und mit dem Koppelfeld 11 über Sende- und Empfangskanäle verbunden, die für eine der Teilnehmeranschlußschaltungen 13 mit S1, S2, R1, R2 bezeichnet sind. Die Teilnehmeranschlußschaltungen 13 sind über digitale Teilnehmeranschlußleitungen 14 mit Fernsprechteilnehmern 15 oder über Kommunikationsadaptoren 17 mit Datenteilnehmern 16 bzw. mit einem Rechner 18 verbunden. Ein Datenteilnehmer 16 ist mit der ihm zugehörigen Teilnehmeranschlußleitung 14 über eine Fernsprechteilnehmerstation 19 verbunden, die auch über einen Dateneingang 20 verfügt. Die Datenteilnehmer 16 können z.B. Bildschirmarbeitsplätze oder sonstige Datenendgeräte sein. Sie können über das Koppelfeld 11 untereinander oder mit dem Rechner 18 so kommunizieren wie die Fernsprechteilnehmer 15. Zusätzlich können sie in noch zu beschreibender Weise in eine Mehrfach-Datenübertragungsverbindung einbezogen werden.

In dem Koppelfeld 11 sind mehrere mögliche Verbindungsarten dargestellt. Im oberen Teil ist eine Fernsprechverbindung zwischen zwei Fernsprechteilnehmern 15 gezeigt, die mit TNA und TNB bezeichnet sind. Die Fernsprechverbindung läuft über zwei Übertragungswege für die beiden Sprechrichtungen. Der Übertragungsweg vom Fernsprechteilnehmer TNA zum Fernsprechteilnehmer TNB über den Sendekanal S1 ist gestrichelt dargestellt und mit 21 bezeichnet, der Übertragungsweg vom Fernsprechteilnehmer TNB zum Fernsprechteilnehmer TNA über den Empfangskanal R1 ist durchgezogen dargestellt und mit 22 bezeichnet. Die Verbindungspunkte des jeweiligen Sende- bzw. Empfangskanals S bzw. R mit dem jeweiligen Übertragungskanal 21 bzw. 22 sind durch Dreiecksymbole hervorgehoben.

Figur 1 zeigt ferner eine Mehrfach-Datenübertragungsverbindung zwischen dem Rechner 18 und allen Datenteilnehmern 16. Die Übertragungswege zum Rechner 18 sind gestrichelt und die Übertragungswege vom Rechner 18 zu den Datenteilnehmern 16 durchgezogen dargestellt. Die Verbindungspunkte im Koppelfeld 11 sind dabei gleichfalls durch Dreiecksymbole hervorgehoben.

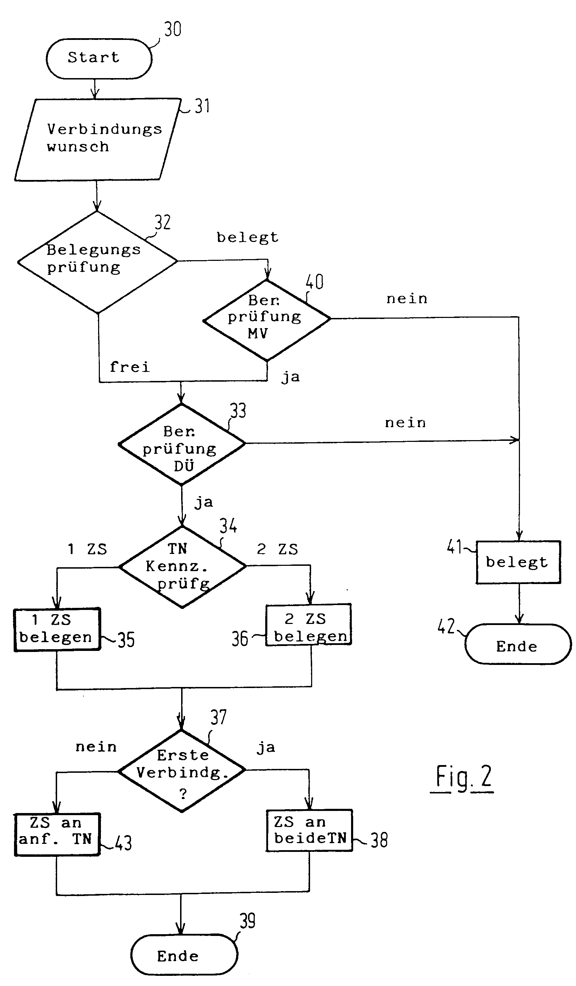

In Figur 2 ist der Ablauf des erfindungsgemäßen Verfahrens innerhalb der zentralen Steuerung 12 (Figur 1) dargestellt. Im folgenden wird erläutert, wie Verbindungen unterschiedlicher Art aufgebaut werden können. In Figur 2 sind solche Verfahrensschritte, die zusätzlich zu bisher üblichen Steuerverfahren durchzuführen sind, durch starke Umrandungen hervorgehoben.

Zunächst wird der Aufbau einer einfachen Datenübertragungsverbindung zwischen zwei Datenteilnehmern beschrieben. Der Start 30 des Steuerverfahrens wird z.B. durch das Belegen einer Teilnehmeranschlußschaltung ausgelöst. Darauf folgt die Eingabe 31 eines Verbindungswunsches seitens des belegenden Datenteilnehmers. Der Verbindungswunsch wird einer Belegungsprüfung 32 zugeführt, bei der geprüft wird, ob der gewünschte Datenteilnehmer belegt oder frei ist. Ist der gewünschte Datenteilnehmer frei, so wird eine Berechtigungsprüfung 33 zur Datenübertragung durchgeführt, der beide Datenteilnehmer unterzogen werden können. Sind beide Datenteilnehmer zur Datenübertragung berechtigt, so folgt darauf eine Teilnehmerkennzeichnungsprüfung 34, durch die festgestellt wird, ob die gewünschte Datenübertragungsverbindung über einen oder zwei Übertragungswege aufzubauen ist. Entsprechend können ein oder zwei Zeitschlitze ZS bereit gestellt werden, die dann bei Verfahrensschritt 35 bzw. 36 als belegt reserviert werden. Anschließend kann bei Verfahrensschritt 37 noch eine Prüfung dahingehend durchgeführt werden, ob die so aufgebaute Datenübertragungsverbindung als neue Verbindung eine erste Verbindung ist oder zusätzlich zu einer bereits bestehenden Datenübertragungsverbindung aufgebaut wurde. Voraussetzungsgemäß soll es sich im hier beschriebenen Fall um eine einfache Datenübertragungsverbindung handeln, so daß diese Verbindung als erste Verbindung erkannt wird und in Schritt 38 beiden Datenteilnehmern der bzw. die Zeitschlitze zugeordnet werden, worauf das Steuerverfahren bei 39 beendet ist.

Soll nun zusätzlich zu einer in vorstehend beschriebener Weise aufgebauten Datenübertragungsverbindung eine weitere Datenübertragungsverbindung aufgebaut werden, so entsteht eine Mehrfach-Datenübertragungsverbindung. In diesem Fall wird nach Ablauf der Verfahrensschritte 30 und 31 bei der Belegungsprüfung 32 ein Belegt-Signal erzeugt, das eine Berechtigungsprüfung 40 auslöst, bei der der gewünschte Datenteilnehmer auf seine Berechtigung zur Mehrfach-Datenübertragungsverbindung geprüft wird. Liegt diese Berechtigung nicht vor, so erfolgt bei Verfahrensschritt 41 eine Belegt-Signalgabe, und der Verbindungswunsch des anfordernden Datenteilnehmers wird zurückgewiesen, womit das Steuerverfahren bei 42 beendet ist. Liegt hingegen eine Berechtigung zur Mehrfach-Datenübertragungsverbindung vor, so wird in den bereits beschriebenen Verfahrensschritt 33 der Berechtigungsprüfung zur Datenübertragung übergeleitet, worauf die Verfahrensschritte 34, 35 und 36 folgen. Im Verfahrensschritt 37 wird dann festgestellt, daß eine Datenübertragungsverbindung bereits existiert, und es erfolgt Ansteuerung des Verfahrensschritts 43, bei dem der bzw. die reservierten Zeitschlitze dem anfordernden Datenteilnehmer zugeordnet werden, womit die Mehrfach-Datenübertragungsverbindung existiert und das Steuerverfahren bei 39 beendet ist.

Wird bei der Berechtigungsprüfung 33 zur Datenübertragung festgestellt, daß eine solche Berechtigung bei dem anfordernden Datenteilnehmer nicht vorliegt, so wird in den bereits beschriebenen Verfahrensschritt 41 der Belegt-Signalgabe und damit in das Ende 42 des Steuerverfahrens übergeleitet.

Eine Fernsprechverbindung wird gemäß dem in Figur 2 gezeigten Verfahrensablauf wie für die einfache Datenübertragungsverbindung bereits beschrieben aufgebaut, wobei in Verfahrensschritt 33 im Rahmen der Berechtigungsprüfung festgestellt wird, daß keiner der beiden für die Fernsprechverbindung vorgesehenen Fernsprechteilnehmer eine Datenübertragungsberechtigung hat, daß also Gleichheit der Berechtigungen besteht. Auch damit wird in den Verfahrensschritt 43 übergeleitet, und der Verbindungsaufbau erfolgt über die Verfahrensschritte 36, 37 und 38 in bereits beschriebener Weise, wobei zwei Übertragungsrichtungen in Betracht kommen.

## Patentansprüche

1. Verfahren zum Steuern des Aufbaus von Datenübertragungsverbindungen in Telekommunikationsanlagen mit digitalen Koppelfeldern und Teilnehmer-Berechtigungskennzeichnung, bei dem die jeweilige Datenübertragungsverbindung nach Verbindungsanforderung eines Teilnehmers abhängig von einer Belegungsprüfung aufgebaut wird, dadurch **gekennzeichnet**, daß bei Koppelfeldern, in denen mindestens einer der von einem Teilnehmer hervorgerufenen Signalzustände einer Koppelleitung von einem anderen Teilnehmer her veränderbar ist, ein bei der Belegungsprüfung erkannter Belegt-Zustand die Prüfung der Berechtigungskennzeichnung des angeforderten Teilnehmers daraufhin veranlaßt, ob dieser mehrfachverbindungsfähig ist, und daß bei positivem Prüfergebnis die angeforderte Datenübertragungsverbindung aufgebaut wird.

2. Verfahren nach Anspruch 1, dadurch **gekennzeichnet**, daß auch eine Prüfung der Berechtigungskennzeichnung für den anfordernden Teilnehmer daraufhin erfolgt, ob dieser datenübertragungsverbindungsberechtigt ist.

3. Verfahren nach Anspruch 1 oder 2, dadurch **gekennzeichnet**, daß bei nach dem Zeitmultiplexprinzip arbeitenden Vermittlungsanlagen die jeweilige Datenübertragungsverbindung abhängig von einer Teilnehmerkennzeichnungsprüfung über einen oder zwei Zeitschlitze hergestellt wird.

## Claims

1. Method for controlling the establishment of data transmission connections in telecommunication systems having digital switching networks and subscriber authorization identifiers, in which the respective data transmission connection is established after a subscriber connection request depending on a seizure check, characterized in that in the case of switching networks in which at least one of the signal states of a switching line caused by a subscriber can be altered by another subscriber, a busy state detected during the seizure check consequently triggers the checking of the authorization identifier of the requested subscriber to establish whether the latter is permitted multiple connections, and in that the requested data transmission connection is established if the result of the check is positive.

2. Method according to Claim 1, characterized in that the authorization identifier for the requesting subscriber is also checked to establish whether the latter is authorized for data transmission connections.

3. Method according to Claim 1 or 2, characterized in that in the case of switching systems operating in accordance with the time-division multiplex principle, the respective data transmission connection is established over one or two time slots depending on a subscriber identifier check.

## Revendications

1. Procédé de commande de l'établissement de liaisons de transmission de données dans des installations de télécommunication comportant des champs numériques de couplage et des caractéristiques d'autorisations d'abonnés, dans lequel la liaison de transmission de données respective est établie après demande de liaison d'un abonné en fonction d'un test d'occupation, caractérisé en ce que, pour des champs de couplage dans lesquels au moins un des états du signal, appelé par un abonné, d'une ligne de couplage d'un autre abonné, est susceptible de changer, un état occupé reconnu lors du contrôle d'occupation donnant lieu au contrôle de la caractéristique d'autorisation de l'abonné sollicité, si celui-ci est à liaisons multiples, et que, dans le cas d'un résultat de contrôle positif, la liaison de transmission de données demandée est établie.

2. Procédé suivant la revendication 1, caractérisé en ce qu'un contrôle de la caractéristique d'autorisation pour l'abonné demandeur s'effectue également, si celui-ci est autorisé à une liaison de transmission de données.

3. Procédé suivant la revendication 1 ou 2, caractérisé en ce que, pour des installations de commutation opérant suivant le principe du multiplexage temporel, la liaison respective de transmission de données est établie en fonction d'un contrôle de la caractéristique de l'abonné, par l'intermédiaire d'une ou de deux voies temporelles.
